(19) Europäisches Patentamt

European Patent Office

Office européen des brevets

(11) **EP 1 965 957 B1**

(12) **EUROPEAN PATENT SPECIFICATION**

(45) Date of publication and mention
of the grant of the patent:
**22.04.2009 Bulletin 2009/17**

(51) Int Cl.:
*B26B 21/54* *(2006.01)*     *B26B 21/58* *(2006.01)*
*B26B 21/60* *(2006.01)*     *C23C 8/10* *(2006.01)*
*C21D 9/56* *(2006.01)*     *C21D 1/76* *(2006.01)*
*C21D 11/00* *(2006.01)*

(21) Application number: **06842546.1**

(22) Date of filing: **14.12.2006**

(86) International application number:
**PCT/IB2006/054875**

(87) International publication number:
**WO 2007/069219 (21.06.2007 Gazette 2007/25)**

(54) **AUTOMATED CONTROL OF RAZOR BLADE COLORIZATION**

AUTOMATISIERTE STEUERUNG DER FÄRBUNG EINER RASIERKLINGE

REGULATION AUTOMATIQUE DE LA COLORATION DE LAMES DE RASOIR

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **14.12.2005 US 750962 P**

(43) Date of publication of application:
**10.09.2008 Bulletin 2008/37**

(73) Proprietor: **The Gillette Company
Boston, Massachusetts 02199 (US)**

(72) Inventors:
• **Kelsey, Adam
Newton, MA 02460 (US)**
• **Skrobis, Kenneth. J.
Maynard, Massachusetts 01754 (US)**

• **Porcaro, Alfred
Everett, Massachusetts 02149 (US)**
• **Depuydt, Joseph, A.
Schituate, MA. 02066 (US)**

(74) Representative: **Chandrani, Vandita et al
Procter & Gamble
Patent Department
Technical Centres Limited
Rusham Park
Whitehall Lane
Egham, Surrey TW20 9NW (GB)**

(56) References cited:
**GB-A- 1 416 887**      **US-A- 5 458 928**
**US-A1- 2005 268 470**      **US-A1- 2006 130 612**

**Description**

FIELD OF THE INVENTION

This invention relates to the field of razor blades and processes for manufacturing razor blades and more particularly to automated control of razor blade color in such processes.

BACKGROUND OF THE INVENTION

Razor blades are typically formed of a suitable metallic sheet material such as stainless steel, which is slit to a desired width and heat-treated to harden the metal. The hardening operation utilizes a high temperature furnace, where the metal may be exposed to temperatures greater than 1100°C for up to 10 seconds, followed by quenching. After hardening, a cutting edge is formed on the blade. The cutting edge typically has a wedge-shaped configuration with an ultimate tip having a radius less than about 1000 angstroms, e.g., about 200 - 300 angstroms. Various coatings may be applied to the cutting edge. For example, hard coatings such as diamond, amorphous diamond, diamond-like carbon (DLC) material, nitrides, carbides, oxides or ceramics are often applied to the cutting edge or the ultimate tip to improve strength, corrosion resistance and shaving ability. Interlayers of niobium or chromium containing materials can aid in improving the binding between the substrate, typically stainless steel, and the hard coatings. A polytetrafluoroethylene (PTFE) outer layer can be used to provide friction reduction.

It is important that these coatings be applied, and any other post-hardening processing steps be performed, under sufficiently low temperature conditions so that the hardened, sharpened steel is not significantly tempered. If the steel is over tempered it will lose its hardness and may not perform properly during use.

Examples of razor blade cutting edge structures and processes of manufacture are described in U.S. Patents Nos. 5,295,305; 5,232,568; 4,933,058; 5,032,243; 5,497,550; 5,940,975; 5,669,144; EP 0591334; and PCT 92/03330.

Razor blades may include a colored coating, i.e., a coating having a color different from the color of the underlying blade material. The term "colored" as used herein, includes all colors, including black and white. The colored coating provides a desirable aesthetic effect, without deleteriously affecting the performance or physical properties of the blade. The color of the razor blades can be color-coordinated with the color of the housing of a razor cartridge or the handle or other components of a shaving system. In some preferred implementations, the coating covers substantially the entire blade surface, enhancing the aesthetic effect and simplifying manufacturing. The coatings are durable, exhibit excellent adhesion to the blade material, and can be produced consistently and relatively inexpensively.

Razor blades can be colored during a steel hardening process by using techniques such as (a) thermal oxidation of the blade steel, or (b) reduction and controlled re-oxidation of a hard metal oxide surface coating, e.g., titanium dioxide, provided on the blade steel. To reduce costs, decrease scrap, and achieve color quality and control, these two techniques require an automatic color control process and tooling.

The thermal oxidation technique includes subjecting a blade material to a hardening process; and, during the hardening process, exposing the blade material to clean dry air in order to form an oxide layer on its surface. The method also includes quenching the blade material, after the oxidizing step, to initiate martensitic transformation of the blade material, and forming the hardened blade material into a razor blade, the oxide layer providing the razor blade with a colored surface. Preferred methods do not deleteriously affect the final properties of the blade.

The reduction and controlled re-oxidation of a hard metal oxide surface coating blade coloration process involves applying a layer of hard metal oxide and/or metal oxynitride, e.g., titanium oxide, and/or other transition metal oxides including zirconium, aluminum, silicon, tungsten, tantalum, niobium, iron, and mixtures thereof to a sheet of soft blade steel, e.g., by physical vapor deposition (PVD), plasma enhanced chemical vapor deposition (PECVD), or other deposition technique, in a layer of uniform thickness. For this coloration process, the hardening operation includes subjecting the metal oxide coated blade material to a hardening process; and, during the hardening process, reducing the oxygen content in the existing metal oxide or oxynitride coating and then re-oxidizing the oxide through exposure of the coating to a controlled amount of clean dry air in proportion to the targeted final coating color. This method also includes quenching the blade material, after the re-oxidation step, to initiate martensitic transformation of the blade material, and forming the hardened blade material into a razor blade. Preferred methods do not deleteriously affect the final properties of the blade.

The thermal oxidation technique includes passing the blade material through a tunnel oven consisting of two zones. The first zone is used to austenize the blade steel and to remove any native oxide coating. This first zone contains mainly hydrogen and nitrogen. A second zone of the tunnel oven, referred to as the oxidation zone, which follows directly after the first zone, is used to oxidize the stainless steel strip surface. The first zone has temperatures near 1100°C throughout most of its length. Temperatures near the exit of the first zone, just prior to the oxidation zone, reduce the temperature of the blade material from over 1100°C during austenization to less that about 800°C as it enters the second zone. The available oxygen in the oxidation zone of the tunnel oven can be controlled by controlling the amount of dry air and nitrogen fed to this zone. By controlling the available oxygen to the oxidation zone, the color of the oxide film formed may be targeted and controlled. After the oxidized steel passes through the oxidation zone of the tunnel oven, by means of water cooled quench blocks, the martensitic quenching is initiated. The hardening process results in martenization of the blade material.

The thermal oxide blade coloration processes described above allow a decorative oxide film to be grown on blade steel during the hardening process, after austenization and prior to the martensitic transformation. If, instead, the blade steel were colorized using a thermal oxide coloration process prior to the hardening process, the color would generally be degraded during the standard hardening process. If a thermal oxide coloration process were employed after the martensitic transformation, it would generally destroy the martensitic properties of the stainless steel strip. The processes described above generally provide highly adherent, protective oxides, while allowing excellent color control and without detrimentally impacting the metallurgic properties of the hardened stainless steel blade strips.

The reduction and controlled re-oxidation of a hard metal oxide surface coating blade coloration and hardening technique includes passing the blade material through a tunnel oven consisting of two zones. The first zone is used to austenize the blade steel and to reduce the oxide coating. This first zone contains mainly hydrogen and nitrogen. A second zone of the tunnel oven, which follows directly after the first zone, is used to re-oxidize the coating. The oxygen partial pressure in the second zone of the tunnel oven can be controlled independently of the ambient conditions in the first zone of the tunnel oven. By controlling the oxygen partial pressure in the second zone of the tunnel oven, the desired color of the oxide film may be further targeted and controlled. After the coated steel passes through the second zone of the tunnel oven, by means of water cooled quench blocks, the martensitic quenching is initiated. The hardening process results in martenization of the blade material.

The reduction and re-oxidation blade coloration processes described above allow a decorative transition metal oxide film to be specially modified (colorized) during the hardening process of a martensitic stainless steel. If a decorative transition metal oxide film is colorized prior to the hardening process, it would generally be degraded during the standard hardening process. If a coloration process were employed after the martensitic transformation, it would either destroy the martensitic properties of the stainless steel strip, or would require extensive temperature control and special material handling. The processes described above generally provide highly adherent, protective oxides, while allowing excellent color control and without detrimentally impacting the metallurgic properties of the hardened stainless steel blade strips.

In both methods of producing colored blades described above, thermal oxidation of the blade steel and reduction and controlled re-oxidation of a hard metal oxide surface coating, the color arises from thin film interference between the partial reflectance of light from the air/oxide interface and the reflectance of light from the oxide/steel interface. Constructive interference occurs when the reflected light from one interface combines in phase with the reflected light from the other interface, producing brightness. Destructive interference occurs when the reflected light from the interfaces combines out of phase, producing darkness. The optical phase difference between reflected light from each interface depends on the optical path length, OPL, through the oxide thin film. The OPL is given by

$$OPL = 2n_f d\cos\theta, \qquad (1)$$

where

    $n_f$ = refractive index of the thin film
    $d$ = thickness of thin film
    $\theta$ = angle the incident light makes to the normal of the thin film surface.

The factor of 2 takes into account the double pass through the film due to reflection.

In the case of thermal oxidation of bare blade steel, the oxide refractive index is assumed nearly constant and the color is primarily due to the final oxide thickness, $d$. When re-oxidizing a hard metal oxide film on blade steel, the hard metal oxide thickness is assumed nearly constant and the color is primarily a function of the degree of re-oxidation, which correlates with an associated increase in refractive index.

Variation in the parameters associated with the hardening process, including temperature, gas flow rates, and gas leaks, result in color drift for the thermal oxidation color process. Variation in the hardening process parameters as well as in the thickness or refractive index of the pre-hardened metal oxide/oxynitride film, if left uncompensated, will also lead to associated color drift in the hardened blade steel for the reduction/re-oxidation process. In addition, abrupt changes in pre-deposited metal oxide film thickness can occur when slitted strips are welded together for continuous processing, thereby causing abrupt color changes in the final product.

For the blade coloration processes discussed, variations can be compensated for, and thus a target color can be reached, through observation of the hardened blade steel color followed by an adjustment to the flow of clean dry air during the oxidation or re-oxidation processes. However, manual adjustment as disclosed for example in US 2005/268470 A1 increases production costs and does not allow sufficiently responsive compensation for color drift, increasing the amount of unacceptable blade material that is produced.

The present invention steps in to provide an improvement in automating color control. Such methods and systems are described below. These methods and systems are suitable for use in various oxidation processes for the coloration of razor blade steel. A feedback loop (closed loop control) is established, including the steps of measuring color, comparing the measured color to a target color value, and quantifying the difference there-between, and, if the difference exceeds a predetermined threshold, adjusting a color adjustment parameter, e.g., the airflow to the oxidation zone, so that the measured and target colors are equivalent or within a predetermined variance.

SUMMARY OF THE INVENTION

The present invention relates to a process for manufacturing a razor blade comprising: an automated feedback loop, measuring a color parameter of a blade steel strip exiting a coloration process, comparing the measured color to a target color and quantifying the difference there-between, and, if the difference exceeds a predetermined threshold, adjusting a color adjustment parameter so that the measured and target colors are equivalent or within a predetermined variance.

In another embodiment, the invention relates to a system for automated control of razor blade color comprising:

a spectrometer configured to measure the reflection spectrum from the blade steel as it exits the colorization process,
a controller configured to adjust a parameter of the colorization process,
a processor configured to determine a parameter associated with the measured reflection spectrum, calculate the difference between the measured parameter and a predetermined target value, and, if the difference is above a predetermined threshold, send a voltage to the mass flow controller, and
a hardening furnace equipped with an oxidation zone.

BRIEF DESCRIPTION OF THE DRAWINGS

FIG. 1 is a flow diagram showing steps in a razor blade manufacturing process, including blade coloration through thermal oxidation, according to one embodiment of the invention.

FIG. 2 is a temperature profile for a hardening furnace.

FIG. 3A is a diagrammatic side view of an oxidation zone.

FIG. 3B is a diagrammatic cross-sectional view of a sparger, taken along line A-A in FIG. 3A.

FIG. 3C is a front view of an exit gate used with oxidation zone shown in FIG. 3A.

FIG. 4 is a flow diagram showing steps in a razor blade manufacturing process, including blade coloration through reduction and controlled re-oxidation, according to one embodiment of the invention.

FIG. 5 is a graph of the reflection spectra for hard metal oxide blade steel in its pre-hardening condition and in various post-hardening conditions (hardening having been conducted with different air flow rates in the oxidation zone). The graph also shows the correlation between the spectrum minimum value, $\lambda_{min}$, and the approximate blade color.

FIG. 6 is a diagram showing an automated color control feedback loop, consisting of a spectrometer, a processor, a mass flow controller, and a hardening furnace equipped with an oxidation zone.

FIG. 7 is a flow chart describing the color control feedback process.

FIG. 8 is a graph showing the $\lambda_{min}$ of a hard metal oxide film on pre-hardened blade steel, $\lambda_{min}$ of a hard metal oxide film on post-hardened blade steel under feedback control, as well as the target minimum wavelength $\lambda_T$.

Like reference symbols in the various drawings indicate like elements.

DETAILED DESCRIPTION OF THE INVENTION

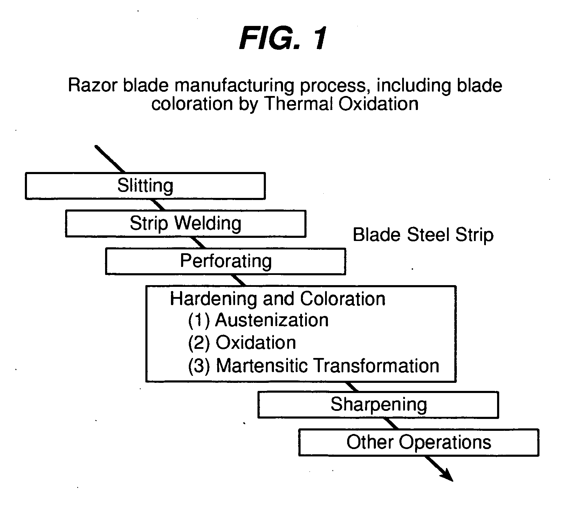

A suitable thermal oxide process for forming the colored oxide layer and manufacturing the razor blade is shown diagrammatically in FIG. 1. First, a sheet of blade steel is slit into strips. The strips are then welded together and then perforated for ease of handling during subsequent processing.

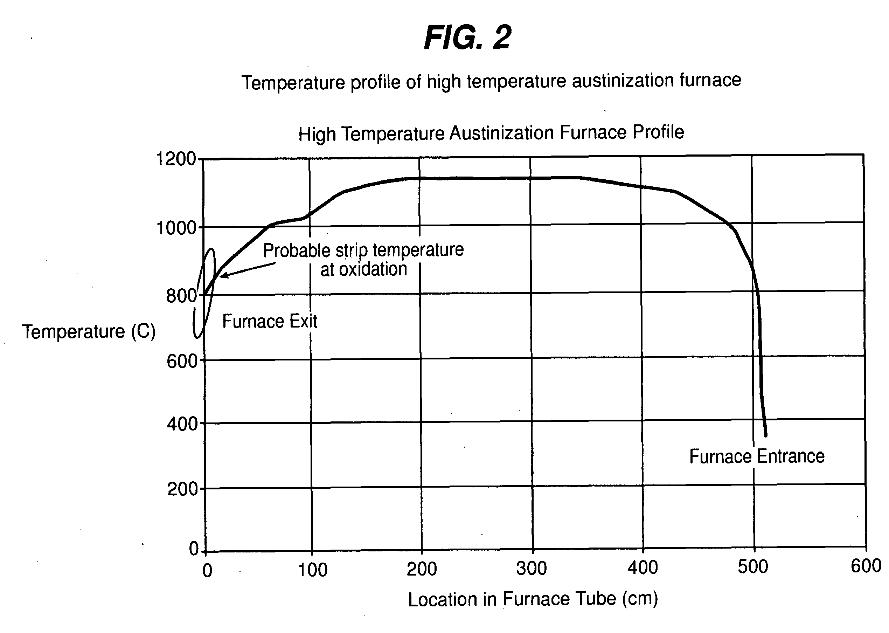

When the desired sequence of pre-hardening steps has been completed, the blade material is subjected to a hardening process, which includes austenization of the stainless steel. A typical temperature profile for the hardening process, which is conducted in a tunnel oven, is shown in FIG. 2. The material is quickly ramped up to a high temperature, e.g., approximately 1160°C, maintained at this temperature for a period of time, during which austenization of the stainless steel occurs, and then allowed to cool. A forming gas (e.g., including hydrogen and nitrogen) flows through the high temperature zone of the oven during austenization. The composition and flow rate of the forming gas are controlled so that no oxidation occurs, and any native oxide is reduced. In an embodiment, the forming gas includes hydrogen, to prevent oxidation and reduce any native oxide, and nitrogen, as an inert gas used to dilute the over-all hydrogen concentration. For example, in some implementations the forming gas may include about 75 % hydrogen and about 25 % nitrogen, and may be delivered at a flow rate of from about 7 to 38 L/min.

After austenization, the strips pass through an oxidation zone, in which the colored oxide layer is grown on the surface of the blade steel. The forming gas flows from the hardening furnace into the oxidation zone. An oxidation gas (e.g., including oxygen) is introduced to the forming gas at a desired point in the oxidation zone (a point at which the strips have reached a temperature suitable for oxidation), and drives the oxidation process. The oxygen may be provided in the form of clean dry air. The oxidation zone and oxidation conditions (e.g., hydrogen to oxygen ratio) will be discussed in detail below. After the material exits the oxidation zone, it is rapidly quenched, resulting in a martensitic transformation of the stainless steel. Quenching does not deleteriously affect the color of the oxide layer.

The processes described herein may be added to existing blade steel hardening processes, often with minimal changes to the existing process. For example, one existing blade steel hardening process utilizes a high temperature furnace (greater than about 1100°C) containing a flowing forming gas. Two parallel continuous stainless steel blade strips are pulled through this high temperature furnace at 36.6 m/min (120 ft/min) each. This high temperature treatment is used to austenitize the stainless steel strips. Near the exit of the high temperature furnace is a water-cooled jacketed tube (also referred to as the water-cooled muffle tube). This section is used to start the cooling process of the stainless steel blade strips. Just after the water-cooled zone, the stainless steel blade strips are pulled through a set of water-cooled quench blocks. The quench blocks initiate the martensitic transformation of the steel. This existing process may be modified to form a colored oxide layer by replacing the water-cooled muffle tube, between the high temperature furnace and the quench blocks, with the oxidization zone referred to above. In certain instances the temperature profile of the furnace may be modified so that the strips exit the furnace at a temperature less than about 800°C, or from about 400 to 750°C, or even from about 600-700°C.

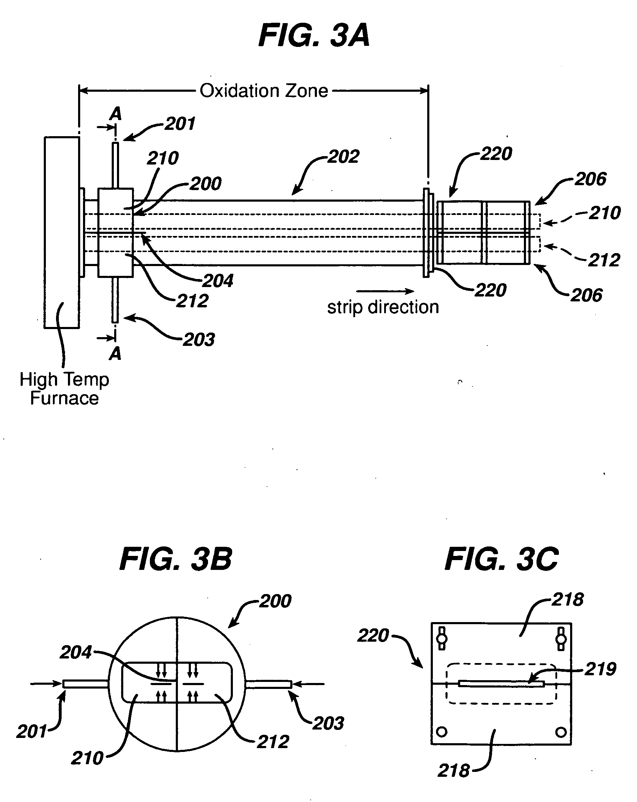

A suitable oxidization zone is shown diagrammatically in FIG. 3A. The oxidation zone may be, for example, an Inconel tube attached to the tubing used in the high temperature furnace of the hardening line. In one embodiment, a gas sparger system 200 is installed about 2.9 cm from the entrance of the tube 202 and dimensioned to extend about 5.1 cm down the tube. In this case, the sparger has a total of 16 inlet gas ports (not shown), and is designed so that gas injected through the sparger (arrows, Fig. 3A) will uniformly impinge upon the stainless steel strips. Gas is introduced to the sparger through a pair of inlet tubes 201, 203. A gas baffle 204 may be included so that the two stainless steel strips of blade material are separated from each other so that the gas composition on each side of the baffle may be controlled partially independent from the other side. The baffle 204 may define two chambers 210, 212, as shown in Fig.3B. In this case, the gas baffle may, for example, begin about 0.3 cm from the entrance of the oxidation zone and extend down the tube about 10.2 cm. If desired, the gas baffle 204 may extend along the entire length of the oxidation zone so that there is no mixing of gas flows from inlet tubes 201 and 203, allowing for independent control to the two sides of the baffle within the tube (210 and 212). The gas sparger is designed so that dual gas flow control is possible, allowing two strips to be processed at the same time, using the same furnace. Gas flow rates may be controlled using gas flow meters. The exit of each chamber of the oxidation zone may be equipped with a flange and two pieces of steel 218 which define a slit 219 and thereby act as an exit gate 220 (Fig. 3C). The slit may be, for example, from about 0.1 to about 0.2 cm wide. This exit gate prevents any back-flow of ambient air into the oxidation zone and also encourages better mixing of the gases within the oxidation zone. As discussed above, just after the oxidation zone, the stainless steel blade strips are pulled through a set of water-cooled quench blocks 206. The quench blocks initiate the martensitic transformation of the steel.

The desired color is generally obtained by controlling the thickness and composition of the oxide layer. The thickness and composition of the colored oxide layer will depend on several variables. For example, the thickness of the oxide layer will depend on the temperature of the stainless steel strip when the oxidation gas is introduced, and by the hydrogen-to-oxygen ratio of the mixture of forming gas and oxidation gas in the oxidation zone. The composition, or stoichiometry, of the oxide layer will depend on these same factors, and also on the morphology and surface composition of the strips. Generally, lower temperatures and flow rates will produce gold colors, and higher temperatures and flow rates will produce violet to blue colors. In some implementations, the hydrogen to oxygen ratio is from about 100:1 to 500:1. For a given type of blade material, with the hydrogen to oxygen ratio around the midpoint of this range, an aesthetic deep blue colored oxide will be obtained. Increasing the relative amount of oxygen will tend to result in light blue and light blue-green colors, while decreasing the relative amount of oxygen will tend to result in violet and then gold colors.

The speed at which the material travels through the oxidation zone and the length of the oxidation zone will also affect colorization. Suitable speeds may be, for example, in the range of from about 15 to about 40 m/min.

In some cases, it may be necessary to adjust the process parameters of the hardening and/or oxidation process in order to obtain a consistent end product. The temperature of the strip as it enters the oxidation zone may be controlled by adjusting the temperature of the last zones in the hardening furnace, and/or by the use of heating elements in the oxidation zone. Increasing the temperature of the strip as it enters the oxidation zone will increase the oxide thickness produced in the oxidation zone. When the process is performed using most conventional furnaces, the temperature of the strip as it enters the oxidation zone can be adjusted only when first setting up the process. Since the gas composition of the oxidizing gas to the oxidation zone can be quickly adjusted, it is this parameter which is generally used to compensate for variations in the strip material and to fine-tune the oxide color. The exact temperature setting of the last zones of the hardening furnace and the exact composition of the oxidizing gas are selected based on, among other factors, the desired color, the size, shape, composition, and speed of the steel strip.

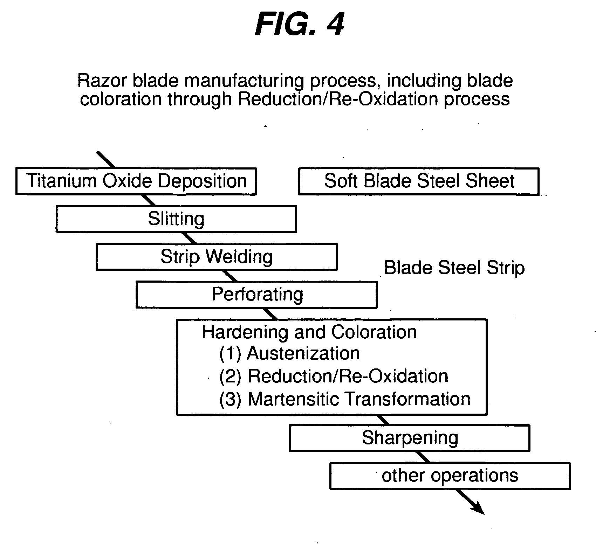

A suitable process for applying the colored coating through the reduction/re-oxidation process and manufacturing the razor blade is shown diagrammatically in FIG. 4. As shown in FIG. 4, preferably, the oxide or oxynitride layer is applied to the sheet material from which the blade is formed, prior to the slitting of the sheet material to a desired width that is typically significantly wider than the final blade width. Performing the coating step at this stage simplifies manufacturing, because a large surface area can be coated at once. The oxide coating is applied to a sheet of soft blade steel, e.g., by physical vapor deposition (PVD), plasma enhanced chemical vapor deposition (PECVD), or other deposition technique, in a layer of uniform thickness. The layer is typically about 400 to about 10,000 Angstroms, for example about 500 to about 800 Angstroms.

When the desired sequence of pre-hardening steps has been completed, the blade material is subjected to a hardening process, which results in martensitic transformation of the stainless steel. A typical temperature profile for the hardening process, which is conducted in a tunnel oven, is shown in FIG. 2. This temperature profile within the oven involves quickly ramping the temperature of the material up to a high temperature, e.g., approximately 1160°C, maintaining the material at this temperature for a period of time, during which austenization of the stainless steel occurs. After the material exits the oven, it is rapidly quenched, causing martenization of the stainless steel.

During the hardening process, the oxide coating is "colorized," i.e., the coloration of the oxide coating is enhanced and/or changed. Colorization may result in an enhancement of the color, for example to a brighter shade or more brilliant appearance, and/or may result in a change of the color of the coating to a different color, e.g., from blue-gray to violet, gold, or blue, or from dull-green to bright green-yellow, dark green, or blue-green. This colorization results from a change in the refractive index of the coating, which in turn results from a change in the composition, stoichiometric composition, and/or the crystalline structure of the oxide coating. The degree of change in the apparent film index of refraction will control the color of the colorized film.

The composition and crystalline structure of the coating after colorization, and thus the final color of the coating, will depend on several variables. For example, the composition, or stoichiometry, of the coating will depend on the gases that are present in the furnace during the hardening procedure. Introducing only nitrogen into the furnace will generally change an initially gray-blue colored titanium oxide coating to bright blue or blue-violet. This color change is due to a reduction in the oxygen content of the titanium oxide coating. If air and/or moisture are introduced to the furnace, the reduction in the oxygen content of the titanium oxide coating is much less, and the resulting index of refraction is higher.

Other variables that affect colorization are the initial thickness and composition of the oxide coating, the temperature profile of the hardening furnace, and the speed at which the material travels through the furnace. If the thickness and/or composition of the coating vary over the length of the material, it may be necessary to adjust the process parameters of the hardening process in order to obtain a consistent end product. Because it is difficult to rapidly adjust the temperature and ambient conditions in the large tunnel ovens that are typically used for hardening, it may be desirable to provide a separate, shorter oven that is more rapidly adjustable (referred to below as "the oxidation zone"): Thus, the conventional, large tunnel oven may be used for the high temperature step of the hardening operation and to slightly reduce the oxide coating (which may also increase the uniformity of its composition), and the additional, shorter oven may be used for oxidation/colorization, providing an oxidation zone in which the gas composition can be relatively quickly adjusted to compensate for variations in the material. The strip temperature in this oxidation zone, and hence the coloration ambient responsiveness, can be adjusted up or down, by adjusting the set point of the last zones of the high temperature furnace. The composition and/or flow rate of the gas(es) introduced to the oxidation zone can then be altered, based on the appearance of the material as it exits the oxidation zone and quenching area.

The oxidation zone may be similar to that described for the thermal oxide blade coloration above, and as previously shown in FIG. 3A. The oxidation zone, when utilized, is located between the high temperature furnace and the first set of water-cooled quench blocks, and replaces the water-cooled muffle tube used on a standard hardening line. The furnace temperature profile may be modified so that the coated stainless steel blade strips emerge from the hardening furnace and enter the oxidation zone at a temperature near or below about 1160°C. Addition of heating elements to the oxidation zone may also be employed to improve the stability of the process, such as during start-up. The oxidation gas, for example a mixture of oxygen and nitrogen introduced as dry air and nitrogen, may be used to control the coloration process, in which case it is added directly to the flow of gases from the high temperature furnace. The inventors have developed methods of, and systems for, automated color control that are suitable but not limited to use in either of the coloration processes described above. A feedback loop (closed loop control) is established, including the steps of measuring color, comparing the measured color to a target color and quantifying the difference there between, and, if the difference exceeds a predetermined threshold, adjusting a color adjustment parameter, e.g., the airflow to the oxidation zone, so that the measured and target colors are equivalent or within a predetermined variance. Preferred systems and methods substantially reduce detectable long-term color variation or drift.

In one aspect, the invention features systems for automated control of razor blade color that include a spectrometer, a processor, a mass flow controller (MFC), and a hardening furnace equipped with an oxidation zone. The spectrometer measures the reflection spectrum from the blade steel as it exits the colorization process (e.g., the hardened and re-oxidized metal oxide coated blade steel or the thermally oxidized blade steel). The reflection spectrum is the percent of reflected light that returns to the spectrometer versus the wavelength of the reflected light. The processor determines a parameter associated with the measured reflection spectrum, e.g., the wavelength of the minimum reflected light ($\lambda_{min}$), and calculates the difference between the measured parameter and a predetermined target value. If the difference is above a predetermined threshold, the processor then sends a voltage to the mass flow controller to either increase or decrease the flow of clean dry air to the oxidation zone, such that the target value is approached. In some implementations, the parameter is the wavelength of the maximum reflected light, $\lambda_{max}$. The measurement of color can be rather subjective and complicated due to the variety of measurement configurations, standards, and methods and the degrees of freedom that comprise "color space." The International Commission on Illumination (CIE) has developed standards by which defined numbers are used to represent a color. According to CIE's standards, color is typically defined by 3 parameters. Advantageously, by using a single parameter, e.g., $\lambda_{min}$ or $\lambda_{max}$, as a designation for color, 3-dimensional color space is represented by a single number. This single number can then be easily used as the color control parameter to adjust a single color adjustment parameter (e.g., airflow) in a real-time feedback loop.

With respect to the present invention, the first step toward achieving automated color control is to measure and define color. The reflection spectra of a hard metal oxide or oxide film on blade steel follows the relationship for thin film interference given by the following equation which can be derived from equation (1) above.

$$2n_f d = (m-1/2)\,\lambda_{min} \quad (2)$$

where $n_f$ = refractive index of the metal oxide film
d = metal oxide film thickness
m = an integer, representing the interference order
$\lambda_{min}$ = wavelength of reflectance minimum, and
$\theta$=0 for light normally incident on the oxide film.

In equation (2), $n_f > n_s$, where $n_s$ is the refractive index of the substrate (blade steel). When $n_f < n_s$, the relationship for thin film interference is modified as shown below:

$$2n_f d = m\,\lambda_{min} \quad (3).$$

Each spectra has a minimum value, $\lambda_{min}$, which is proportional to the film thickness, d, and refractive index, $n_f$.

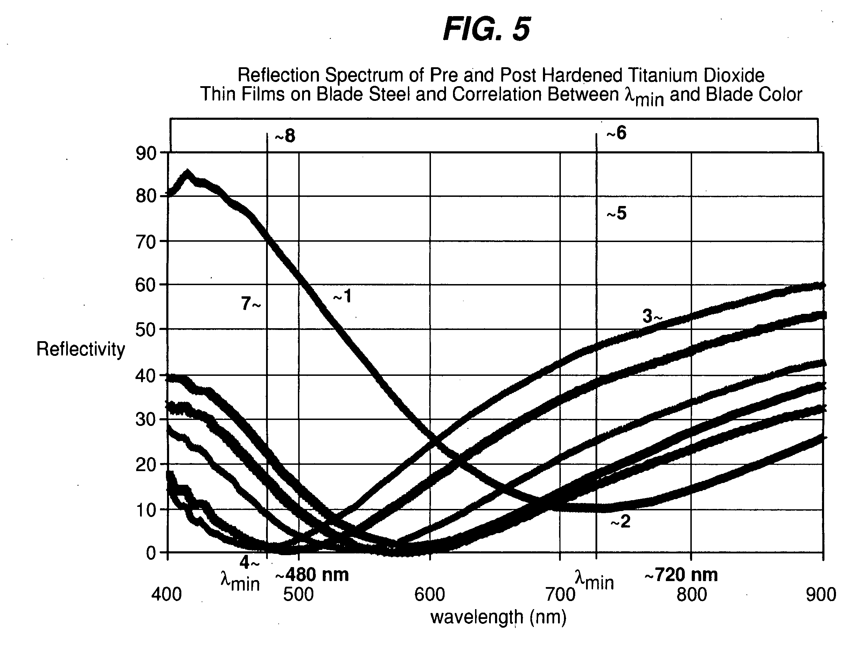

FIG. 5 is a graph of the pre- and post-hardened reflection spectra (reflected light vs wavelength) from titanium dioxide coated blade steel, measured with a fiber optic spectrometer. Each curve corresponds to the same film thickness but different refractive indices. The pre-hardened film is represented by spectral curve **1** with a $\lambda_{min}$ **2** of about 720 nm. Undergoing the hardening process, the oxide in the film is reduced, which also decreases $n_f$ and shifts the spectrum and associated $\lambda_{min}$ to shorter wavelengths. The remaining spectral curves represent post-hardened titanium dioxide films that have experienced different amounts of airflow in the oxidation zone. For example, post-hardened reflectance curve **3** exhibits a $\lambda_{min}$ **4** of about 480 nm. This material was produced with no air flow to the oxidation zone. Adjacent

curves, with increasing $\lambda_{min}$, represent post-hardened titanium dioxide films with increasing airflow to the oxidation zone. Since the amount of re-oxidation increases with airflow, the refractive index increases as well. This shifts the spectra and associated $\lambda_{min}$ to longer wavelengths. The airflow rates used for the post-hardened titanium dioxide films in FIG. 5 were in the range (but not limited to) 0-200 mL/min for the associated set of conditions. Each spectrum and associated $\lambda_{min}$ correlates to a distinct color as seen by the color scale at the top of the graph (the color scale is reproduced in black and white - the original scale started with pink on the far left, darkening to violet, blue-violet, and deep blue in the center, and then fading to light blue on the far right). Following the cursor **5** from the minimum wavelength **2** of the hardened material spectral curve **1** to the color scale at the top of the graph indicates that a $\lambda_{min}$ of 720 nm would have the visual appearance of light blue **6**. Following the cursor **7** from the minimum wavelength **4** of the post-hardened material spectral curve **3** to the color scale at the top of the graph indicates that a $\lambda_{min}$ of 480 nm would have the visual appearance of violet **8**. Therefore, using $\lambda_{min}$ as a designation for film color allows the representation of 3-dimensional color space by a single parameter.

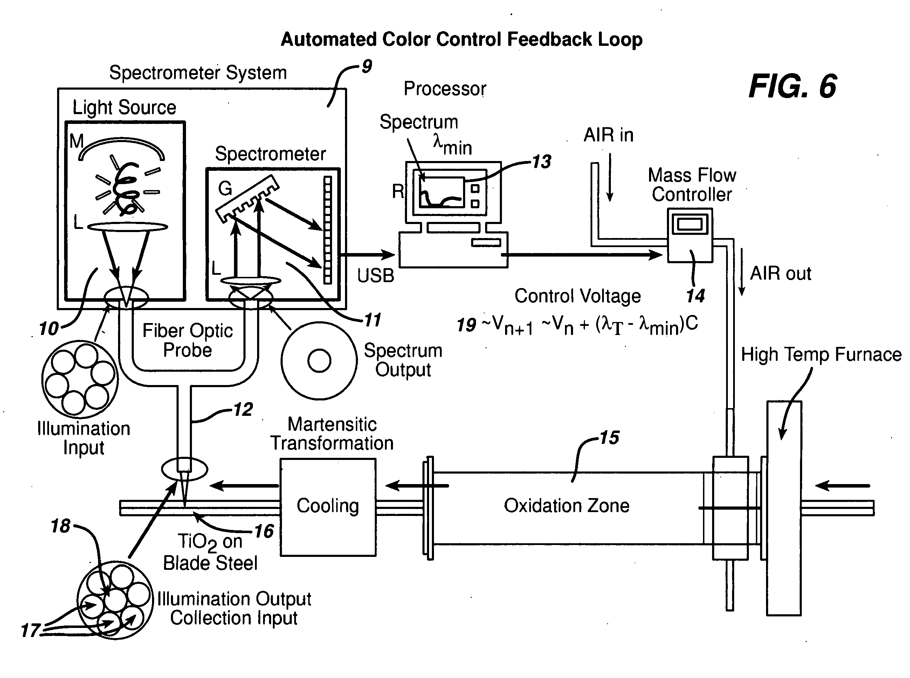

The second step in achieving color control is to develop a feedback loop which enables a targeted color to be maintained despite drifts in the hard metal oxide film thickness and refractive index, or drifts in the parameters associated with the thermal oxide coloration process (e.g., temperature, gas concentration, etc). FIG. 6 depicts an automated color control feedback loop consisting of a spectrometer system **9**, a processor **13**, a mass flow controller **14**, and a hardening furnace equipped with an oxidation zone **15**. A software program, residing on the processor, communicates with and controls the spectrometer, analyzes the reflection spectra, and communicates with and controls the mass flow controller. The spectrometer system **9** consists of a light source **10**, e.g., a tungsten light source, a spectrometer **11**, and a fiber optic reflection/backscatter probe **12**. Light from the light source **10** is coupled into a bundle of six illuminating fibers **17**. These six illuminating fibers surround a centrally located read fiber **18**, which is coupled to the spectrometer **11**. Light emitted from the illuminating fibers **17** is directed onto the sample **16**. The light reflected from the sample is then collected by the central read fiber **18**, and coupled into the spectrometer **11**. Within the spectrometer **11**, the light is collimated and dispersed from a diffraction grating onto a detector array whose pixels are spatially calibrated so as to correlate linear position along the array to a particular wavelength. A processor **13** displays the intensity of the reflected light at each wavelength. The fiber core diameters are typically (but not limited to) in the range of 100-400 microns. A smaller fiber core diameter allows a smaller sampling spot diameter at the expense of a lower optical coupling efficiency into the fiber, resulting in less available light for the measurement. The processor determines the wavelength with the minimum reflected light, then sends a calculated control voltage $V_{N+1}$, **19** to a mass flow controller **14** that controls the amount of air flow to the oxidation zone **15**, thus completing the feedback loop. The calculated control voltage is related to the difference between the target wavelength of minimum reflectance, $\lambda_T$, and the measured wavelength of minimum reflectance, $\lambda_{min}$. The calculation of the control voltage can utilize traditional proportional, integral, derivative (PID) type feedback based on the color difference and/or incorporate a variety of feed-forward and adaptive modeling techniques to reduce color variation due to noise as well. An example of an algorithm used to determine the mass flow controller (MFC) control voltage required to achieve $(\lambda_T - \lambda_{min})$ < threshold would be as follows:

$$V_{n+1} = V_n + \Delta V = V_n + [(\lambda_T - \lambda_{min})G]/[M_{color}M_{MFC}] \quad (4)$$

where

$V_{n+1}$: new MFC control voltage in units of volts
$V_n$: old MFC control voltage in units of volts
$\Delta V$: required change in control voltage for $(\lambda_T - \lambda_{min})$ < threshold in volts
$\lambda_T$: target minimum wavelength in units of nm
$\lambda_{min}$: measured minimum wavelength in units of nm
G: feedback loop gain setting, unitless
$M_{color}$: color slope in units of (nm-min)/mL
$M_{MFC}$: mass flow controller slope in units of mL(min-volt)

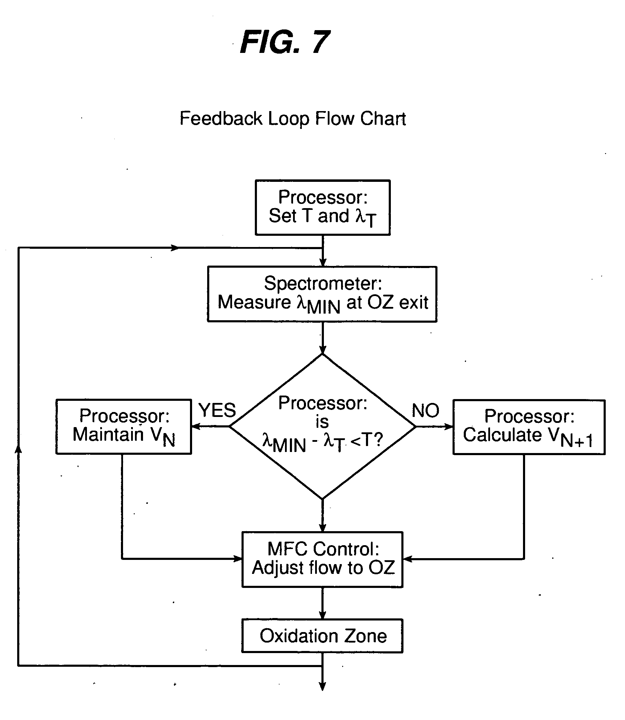

In equation 4 above, the new MFC voltage setting, $V_{n+1}$, required to make $(\lambda_T - \lambda_{min})$ less than some predetermined threshold, T, is equal to the existing voltage setting, $V_n$, plus some adjustment voltage, $\Delta V$. The color slope, $M_{color}$, determined experimentally, is the slope of the $\lambda_{min}$ versus airflow rate curve for a specific metal oxide coated material on blade steel and hardening furnace parameters. The MFC slope, $M_{MFC}$; is the equation describing the relationship between voltage applied to the MFC and associated flow rate. For example, if the MFC flow range is 0-200 mL/min for a corresponding control voltage of 0-5 volts, the slope would be 40 mL(min-volt). The threshold, T, can be set very small for tight color control, or even set to zero. A flow chart depicting the color control feedback process is shown in FIG. 7.

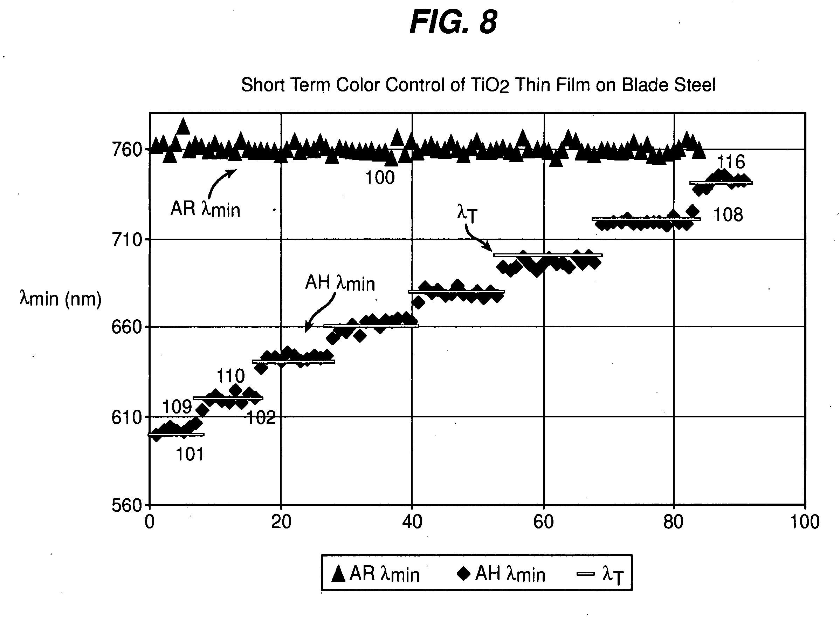

A graph displaying the performance of the feedback loop is shown in FIG. 8. The triangular data points **100** at the top of the graph represent the as-received (pre-hardened) minimum wavelength (AR $\lambda_{min}$), measured from the reflection spectrum of titanium dioxide film on blade steel. The mean value is 760.4 nm with a standard deviation of 2.8 nm. To simulate a large differential between the $\lambda_{min}$ of a hard metal oxide film on pre-hardened blade steel and the target minimum wavelength $\lambda_T$, and to demonstrate a range of color control, the setpoint, or target color, $\lambda_T$, was incrementally changed as seen by the staircase of dashed lines 101, 102,..., 108. The diamonds, 109, 110..., 116, surrounding the dashed lines, represent the post-hardened measured minimum wavelength, AH $\lambda_{min}$, under feedback control. The measured $\lambda_{min}$ follows the setpoint $\lambda_T$ with a standard deviation of about 3.3 nm. Averaging of the spectral scans can be used to improve the signal to noise ratio and reduce measurement error at the expense of a longer time delay between updates.

To improve the responsiveness of the feedback loop, the response time of the mass flow controller should be as fast as possible and the volume of space comprising the oxidation zone and associated tubing which carries the clean dry air to the oxidation zone should be minimized. Also, since the blade steel is traveling through the hardening furnace and oxidation zone at relatively high speeds, (e.g., 24 in/sec), it is important to place the spectrometer's fiber optic probe (or other measurement instrument) as close to the oxidation exit port as possible.

As the film thickness increases, the reflectance spectra may exhibit multiple maxima and minima corresponding to successive interference orders, m. If multiple reflectance minima exist within the spectrometer wavelength range, the processor software program can use a windowing function to limit its search for $\lambda_{min}$ to a specific portion of that wavelength range in order to isolate the spectral minima corresponding to a specific interference order. More complex software can utilize the number and location of multiple reflection maximum and minimum to monitor and control the strip color.

For example, in addition to using a characteristic of the reflection spectrum measured with a spectrometer as the feedback control parameter, other types of measurement systems with their own characteristic can be used to specify a control parameter for the feedback loop. For example, an "RGB," three light source color differentiating sensor can represent color using the ratios of reflected red, green and blue light from a sample material compared to the ratios of these colors from a material of a specific target color. The sensor output is a percentage representing how close the sample material color is to the target material color. The sensor output can be used as the feedback loop control parameter.

Moreover, as noted above, the reflectance maxima, $\lambda_{max}$, can be used as a designation for color rather than $\lambda_{min}$, and follows a similar relationship for thin film interference. Accordingly, other embodiments are within the scope of the following claims.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

**Claims**

1.  A process for manufacturing a razor blade **characterized in that** said process comprises: an automated feedback loop, measuring a color parameter of a blade steel strip exiting a coloration process, comparing the measured color to a target color and quantifying the difference there-between, and, if the difference exceeds a predetermined threshold, adjusting a color adjustment parameter so that the measured and target colors are equivalent or within a predetermined variance.

2.  The process of claim 1 wherein the coloration process includes passing the steel strip through an oxidation zone, and the color adjustment parameter comprises air flow rate in the oxidation zone.

3.  The process of claim 1 wherein the measuring step comprises measuring the reflection spectrum of the blade steel.

4.  The process of claim 3 wherein the color parameter is the maximum or minimum value of the reflection spectrum.

5.  The process of claim 3 wherein the measuring step is performed using a spectrometer.

6.  The process of claim 2 wherein the adjusting step comprises using a mass flow controller to adjust the air flow.

7.  The process of claim 1 wherein the coloration process comprises a thermal oxidation process or a reduction/re-oxidation process.

8.  The process of claim 7 wherein the thermal oxidation process or reduction/re-oxidation process are part of the steel hardening process.

9.  The process of claim 1 wherein the quantification of the difference is performed by a processor.

10. A system for automated control of razor blade color **characterized in that** said system comprises:

    a spectrometer configured to measure the reflection spectrum from the blade steel as it exits the colorization process,
    a controller configured to adjust a parameter of the colorization process,
    a processor configured to determine a parameter associated with the measured reflection spectrum, calculate the difference between the measured parameter and a predetermined target value, and, if the difference is above a predetermined threshold, send a voltage to the mass flow controller, and
    a hardening furnace equipped with an oxidation zone.

11. The system of claim 10 wherein the parameter is the wavelength of the minimum reflected light ($\lambda_{min}$) or maximum reflected light $\lambda_{max}$) of the reflection spectrum or higher order minimums or maximums.

**Patentansprüche**

1.  Verfahren zum Herstellen einer Rasierklinge, **dadurch gekennzeichnet, dass** das Verfahren Folgendes umfasst:

    eine automatisierte Rückkopplungsschleife zum Messen eines Farbparameters eines Klingenstahlstreifens, der ein Färbeverfahren verlässt, Vergleichen der gemessenen Farbe mit einer Zielfarbe und Quantifizieren der Differenz dazwischen und, wenn die Differenz einen vorgegebenen Schwellenwert überschreitet, Einstellen eines Farbeinstellungsparameters, so dass die gemessene Farbe und die Zielfarbe äquivalent oder innerhalb einer vorgegebenen Varianz sind.

2.  Verfahren nach Anspruch 1, wobei das Färbeverfahren das Leiten des Stahlstreifens durch eine Oxidationszone beinhaltet und der Farbeinstellungsparameter die Luftströmungsrate in der Oxidationszone umfasst.

3.  Verfahren nach Anspruch 1, wobei der Messschritt das Messen des Reflexionsspektrums des Klingenstahls umfasst.

4.  Verfahren nach Anspruch 3, wobei der Farbparameter der Höchst- oder Mindestwert des Reflexionsspektrums ist.

5.  Verfahren nach Anspruch 3, wobei der Messschritt mithilfe eines Spektrometers durchgeführt wird.

6.  Verfahren nach Anspruch 2, wobei der Einstellungsschritt die Verwendung einer Massenstromsteuereinrichtung zum Einstellen des Luftstroms umfasst.

7.  Verfahren nach Anspruch 1, wobei das Färbeverfahren ein thermisches Oxidationsverfahren oder ein Reduktions-/ Reoxidationsverfahren umfasst.

8.  Verfahren nach Anspruch 7, wobei das thermische Oxidationsverfahren oder das Reduktions-/Reoxidationsverfahren Teil des Stahlhärtungsverfahrens ist.

9.  Verfahren nach Anspruch 1, wobei die Quantifizierung der Differenz von einem Prozessor durchgeführt wird.

10. System zur automatisierten Steuerung der Rasierklingenfarbe, **dadurch gekennzeichnet, dass** das System Folgendes umfasst:

    ein Spektrometer, das so konfiguriert ist, dass es das Reflexionsspektrum von dem Klingenstahl, wie er das Färbeverfahren verlässt, misst,
    eine Steuereinrichtung, die so konfiguriert ist, dass sie einen Parameter des Färbeverfahrens einstellt,
    einen Prozessor, der so konfiguriert ist, dass er einen Parameter, der mit dem gemessenen Reflexionsspektrum assoziiert ist, misst, die Differenz zwischen dem gemessenen Parameter und einem vorgegebenen Zielwert berechnet und, wenn die Differenz über einem vorgegebenen Schwellenwert liegt, eine Spannung an die Massenstromsteuereinrichtung sendet, und

einen Härtungsofen, der mit einer Oxidationszone ausgestattet ist.

**11.** System nach Anspruch 10, wobei der Parameter die Wellenlänge des minimalen reflektierten Lichts ($\lambda_{min}$) oder des maximalen reflektierten Lichts $\lambda_{max}$) des Reflexionsspektrums oder von Mindest- oder Höchstwerten höherer Ordnung ist.

**Revendications**

**1.** Procédé pour la fabrication d'une lame de rasoir, **caractérisé en ce que** ledit procédé comprend :

une boucle de rétroaction automatisée, mesurant un paramètre de couleur d'une bande d'acier à lame sortant d'un procédé de coloration, comparant la couleur mesurée à une couleur cible et quantifiant la différence entre elles, et, si la différence dépasse un seuil prédéterminé, ajustant un paramètre d'ajustement de couleur de sorte que les couleurs mesurées et cibles sont équivalentes ou dans une variance prédéterminée.

**2.** Procédé selon la revendication 1, dans lequel le procédé de coloration inclut un passage de la bande d'acier à travers une zone d'oxydation, et le paramètre d'ajustement de couleur comprend un débit d'air dans la zone d'oxydation.

**3.** Procédé selon la revendication 1, dans lequel l'étape de mesure comprend une mesure du spectre de réflexion de l'acier à lame.

**4.** Procédé selon la revendication 3, dans lequel le paramètre de couleur est la valeur maximale ou minimale du spectre de réflexion.

**5.** Procédé selon la revendication 3, dans lequel l'étape de mesure est effectuée en utilisant un spectromètre.

**6.** Procédé selon la revendication 2, dans lequel l'étape d'ajustement comprend l'utilisation d'un régulateur de débit massique pour ajuster le flux d'air.

**7.** Procédé selon la revendication 1, dans lequel le procédé de coloration comprend un procédé d'oxydation thermique ou un procédé de réduction/ré-oxydation.

**8.** Procédé selon la revendication 7, dans lequel le procédé d'oxydation thermique ou le procédé de réduction/ré-oxydation font partie du procédé de durcissement de l'acier.

**9.** Procédé selon la revendication 1, dans lequel la quantification de la différence est effectuée par un processeur.

**10.** Système pour un contrôle automatisé de la couleur d'une lame de rasoir, **caractérisé en ce que** ledit système comprend :

un spectromètre conçu pour mesurer le spectre de réflexion de l'acier à lame tel qu'il sort du procédé de colorisation,
une unité de commande conçue pour ajuster un paramètre du procédé de colorisation,
un processeur conçu pour déterminer un paramètre associé au spectre de réflexion mesuré, calculer la différence entre le paramètre mesuré et une valeur cible prédéterminée et, si la différence est supérieure à un seuil prédéterminé, envoyer une tension au régulateur de débit massique, et
un four de durcissement équipé d'une zone d'oxydation.

**11.** Système selon la revendication 10, dans lequel le paramètre est la longueur d'onde de la lumière réfléchie minimale ($\lambda_{min}$) ou la lumière réfléchie maximale $\lambda_{max}$) du spectre de réflexion ou des minimums ou maximums d'ordre plus élevé.

# FIG. 1

Razor blade manufacturing process, including blade coloration by Thermal Oxidation

Slitting

Strip Welding

Blade Steel Strip

Perforating

Hardening and Coloration
(1) Austenization
(2) Oxidation
(3) Martensitic Transformation

Sharpening

Other Operations

# FIG. 2

Temperature profile of high temperature austinization furnace

High Temperature Austinization Furnace Profile

EP 1 965 957 B1

## FIG. 3A

Oxidation Zone

A
201
210
200
202
220
206
210
212
200
204
212
strip direction
220
206
203
A

High Temp
Furnace

## FIG. 3B

200
204
201
210
212
203

## FIG. 3C

220
218
219
218

# FIG. 4

Razor blade manufacturing process, including blade
coloration through Reduction/Re-Oxidation process

| Titanium Oxide Deposition | | Soft Blade Steel Sheet |
|---|---|---|

Slitting

Strip Welding

Blade Steel Strip

Perforating

Hardening and Coloration
  (1) Austenization
  (2) Reduction/Re-Oxidation
  (3) Martensitic Transformation

Sharpening

other operations

FIG. 5

Reflection Spectrum of Pre and Post Hardened Titanium Dioxide
Thin Films on Blade Steel and Correlation Between $\lambda_{min}$ and Blade Color

# Automated Color Control Feedback Loop

**FIG. 6**

Spectrometer System — 9

Light Source

M

L

Spectrometer

G

L

Fiber Optic Probe

Illumination Input

10

11

Spectrum Output

12

USB

Processor

Spectrum $\lambda_{min}$

R

13

AIR in

Mass Flow Controller

14

AIR out

Control Voltage

$19 \sim V_{n+1} \sim V_n + (\lambda_T - \lambda_{min})C$

High Temp Furnace

Martensitic Transformation

15

Cooling

Oxidation Zone

16

$TiO_2$ on Blade Steel

18

17

Illumination Output Collection Input

EP 1 965 957 B1

# *FIG. 7*

Feedback Loop Flow Chart

```
            ┌──────────────────┐
            │   Processor:     │
            │   Set T and λ_T  │
            └──────────────────┘
                     │
                     ▼
            ┌──────────────────────────┐
            │   Spectrometer:          │
            │   Measure λMIN at OZ exit│
            └──────────────────────────┘
                     │
                     ▼
                   ◇ Processor:
  YES             is  λMIN - λT <T?        NO
┌──────────────┐                      ┌──────────────────┐
│ Processor:   │◄──                 ──►│ Processor:       │
│ Maintain V_N │                       │ Calculate V_N+1  │
└──────────────┘                       └──────────────────┘
        │            │                          │
        │            ▼                          │
        │   ┌──────────────────┐                │
        └──►│ MFC Control:     │◄───────────────┘
            │ Adjust flow to OZ│
            └──────────────────┘
                     │
                     ▼
            ┌──────────────────┐
            │ Oxidation Zone   │
            └──────────────────┘
                     │
                     ▼
```

FIG. 8

Short Term Color Control of TiO₂ Thin Film on Blade Steel

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5295305 A
- US 5232568 A
- US 4933058 A
- US 5032243 A
- US 5497550 A
- US 5940975 A
- US 5669144 A
- EP 0591334 A
- EP 9203330 W
- US 2005268470 A1